# EUROPEAN PATENT SPECIFICATION

(11) **EP 1 810 919 B1**
(45) Date of publication and mention of the grant of the patent: **06.07.2016**
(21) Application number: 06120676.9
(22) Date of filing: 14.09.2006
(51) Int. Cl.: B62M 9/12, B62M 9/1242

(54) **Bicycle rear derailleur**
Hinterradkettenschaltung für ein Fahrrad
Dérailleur arrière pour bicyclette

(30) Priority: 20.01.2006 US 335815
(43) Date of publication of application: 25.07.2007
(73) Proprietor: SHIMANO INC., Osaka 590-8577 (JP)
(72) Inventor: Shahana, Satoshi, Sakai City, Osaka 590-8577 (JP); Nagasawa, Hajime, Sakai City, Osaka 590-8577 (JP)
(74) Representative: Intès, Didier Gérard André

(56) References cited:
- EP-A2- 0 075 927
- EP-A2- 1 433 695
- FR-A- 819 685
- FR-A- 877 217
- US-A1- 2003 220 163

## Description

### BACKGROUND OF THE INVENTION

### Field of the Invention

This invention generally relates to a bicycle rear derailleur. More specifically, the present invention relates to a bicycle rear derailleur with reduced friction between the pivotal parts of the rear derailleur.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle rear derailleur.

Typically, a rear derailleur has a base member and a movable member with a chain guide movably coupled to the base member via a linkage assembly. The base member is typically coupled to the rear triangle of the bicycle frame using a bolt for limited rotation about the bolt. The chain guide is configured to move the chain laterally over a plurality of rear sprockets. The chain guide is typically coupled to the movable member using a shaft for limited rotation relative to the movable member. The linkage assembly typically includes a pair of pivotal links pivotally coupled to both the base member and the movable member using pivot pins. A spring typically biases the chain guide to an innermost or outermost position relative to the rear sprockets. A bowden-type control cable with an outer sheath and an inner wire is typically coupled between the rear derailleur and a conventional shift control device. Thus, the chain guide can be moved laterally by moving the linkage assembly via the inner wire. Pulling the inner wire moves the chain guide against the biasing force of the spring, while releasing the inner wire causes the chain guide to move due to the biasing force of the spring.

While these typical rear derailleurs usually work well, there are drawbacks with the typical rear derailleur designs. In particular, the numerous pivotal parts need lubrication for smooth movement. Over time, the lubrication between the pivotal parts may diminish and/or deteriorate, increasing friction between the pivotal parts. Thus, shifting performance may not be optimal after prolonged use. With certain designs, this situation of diminished lubrication (i.e., increased friction) occurs relatively early in the derailleur life due to the amount of lubricant that can be initially provide between the pivotal parts, exposure of parts to outside elements and/or riding conditions. In any case, once the lubrication between the pivotal parts diminishes/deteriorates to a certain degree, new (additional) lubricant needs to be added. In order to add lubricant to most derailleurs, the rear derailleur needs to be at least partially disassembled. This is inconvenient. Moreover, depending on the derailleur design, it can be difficult to add additional or new lubricant even when the derailleur is disassembled.

A bicycle rear derailleur having the features as set forth in the preamble of claim 1 is known from document EP 1 433 695 A.

In view of the above, it will be apparent to those skilled in the art from this disclosure that there exists a need for an improved bicycle rear derailleur. This invention addresses this need in the art as well as other needs, which will become apparent to those skilled in the art from this disclosure.

### SUMMARY OF THE INVENTION

One object of the present invention is to provide a bicycle rear derailleur that moves a chain guide between a plurality of lateral shift positions in a smooth and reliable manner.

Another object of the present invention is to provide a bicycle rear derailleur, which can be used a relatively long time before needing additional or new lubricant addition.

Another object of the present invention is to provide a bicycle rear derailleur, which can have a relatively large amount of lubricant initially provided between the pivotal parts and which retains the lubricant that is provided between the pivotal parts.

Yet another object of the present invention is to provide a bicycle rear derailleur, which is relatively simple and inexpensive to manufacture and assemble.

The foregoing objects can basically be attained by providing a bicycle rear derailleur comprising a base member, a movable member and a linkage assembly. The base member includes a first axle configured to be attached to a bicycle frame and a first support portion pivotally mounted relative to the first axle. The movable member includes a second axle, a second support portion pivotally mounted relative to the second axle and a chain guide coupled to the second axle. The linkage assembly is coupled between the first and second support portions to move the chain guide portion between a retracted position and an extended position. At least one tubular sleeve member pivotally mounted onto one of the first and second axles and extending longitudinally along a majority of the respective axle, and having a grease receiving opening that extends between a cylindrical radially exterior surface and a cylindrical radially interior surface of the tubular sleeve.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is an outside elevational view of a portion of a bicycle having a rear derailleur mounted thereto in accordance with a preferred embodiment of the present invention;
Figure 2 is an enlarged, outside perspective view of the rear derailleur illustrated in Figure 1;
Figure 3 is an enlarged, inside elevational view of the rear derailleur illustrated in Figures 1 and 2;
Figure 4 is a rear end elevational view of the rear derailleur illustrated in Figure 3, with an extended position of the chain guide shown in phantom lines for the purpose of illustration;
Figure 5 is a front end elevational view of the rear derailleur illustrated in Figures 3 and 4;
Figure 6 is a top plan view of the rear derailleur illustrated in Figures 3-5;
Figure 7 is a bottom plan view of the rear derailleur illustrated in Figures 3-6;
Figure 8 is an enlarged, partial cross-sectional view of the base member and axle assembly of the front derailleur illustrated in Figures 1-7, as seen along section line 8-8 of Figure 6;
Figure 9 is an enlarged, partial cross-sectional view of the base member and axle assembly of the front derailleur illustrated in Figures 1-7, as seen along section line 9-9 of Figure 4;
Figure 10 is an enlarged, partial cross-sectional view of the movable member and axle assembly of the front derailleur illustrated in Figures 1-7, as seen along section line 10-10 of Figure 6;
Figure 11 is a longitudinal elevational view of the sleeve member illustrated in Figure 8;
Figure 12 is a longitudinal elevational view of the sleeve member illustrated in Figure 8, but with the sleeve member rotated ninety degrees for the purpose of illustration;
Figure 13 is a longitudinal cross-sectional view of the sleeve member illustrated in Figures 11 and 12, as seen along section line 13-13 of Figure 12;
Figure 14 is an end elevational view of the sleeve member illustrated in Figures 11-13;
Figure 15 is a longitudinal elevational view of the sleeve member illustrated in Figure 10;
Figure 16 is a longitudinal elevational view of the sleeve member illustrated in Figure 10, but with the sleeve member rotated ninety degrees for the purpose of illustration;
Figure 17 is a longitudinal cross-sectional view of the sleeve member illustrated in Figures 15 and 16, as seen along section line 17-17 of Figure 15;
Figure 18 is an end elevational view of the sleeve member illustrated in Figures 15-17;
Figure 19. is a longitudinal elevational view of the pivot pin illustrated in Figure 9;
Figure 20 is a longitudinal elevational view of the pivot pin illustrated in Figure 9, but with the pivot rotated one hundred eighty degrees for the purpose of illustration; and
Figure 21 is an enlarged end elevational view of the pivot pin illustrated in Figures 19 and 20.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

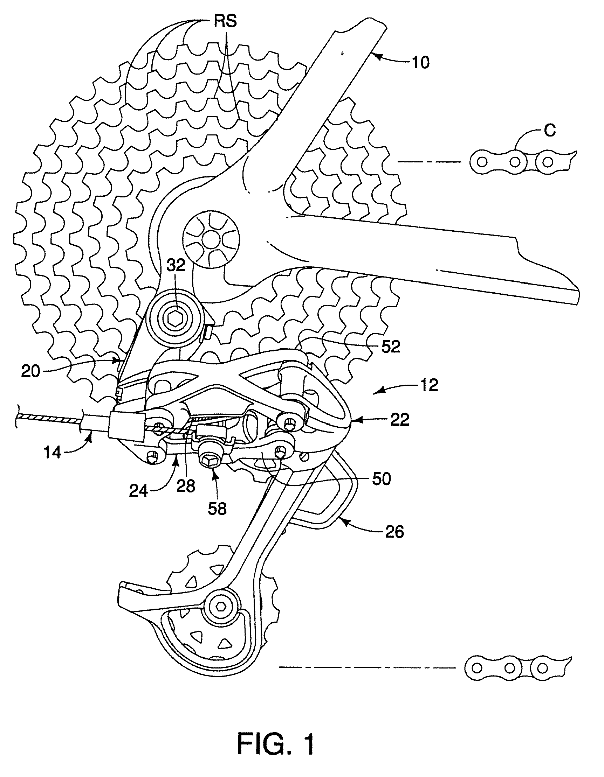

Referring initially to Figure 1, a rear portion of a bicycle frame 10 is illustrated having a rear derailleur 12 mounted thereto in accordance with a preferred embodiment of the present invention. The rear derailleur 12 is configured and arranged such that the pivotal connections of the rear derailleur 12 operate with low friction (without increased friction) even after extended use. Specifically, the pivotal connections of the rear derailleur 12 are configured and arranged to facilitate providing a relatively large amount of lubricant (e.g. grease) between the pivotal parts during initial assembly and to facilitate lubricant (e.g. grease) retention between the pivotal parts during use.

The rear fork or triangle of the bicycle frame 10 has a rear gear assembly (cassette) having multiple rear gears or sprockets RS rotatably coupled thereto via the rear hub (not shown). A chain C is received on the rear sprockets RS and is operatively coupled to a set of front gears or sprockets (not shown) in a conventional manner for transmitting the desired rotational torque to the rear wheel of the bicycle in a conventional manner. The rear derailleur 12 is coupled to a rear derailleur shifting mechanism (not shown) via a rear derailleur or shift cable 14 in a conventional manner. More specifically, the rear derailleur 12 is illustrated as low-normal type that is designed to be normally biased inwardly such that the chain C is normally positioned on the innermost (largest) gear or sprocket RS. Thus, when the rider actuates the rear derailleur shifting mechanism to pull the cable 14, the rear derailleur 12 moves the chain C outwardly to engage the next gear. On the other hand, when the rider actuates the rear derailleur shifting mechanism (not shown) to release the cable 14, the rear derailleur 12 moves the chain C inwardly to engage the next gear. However, it will be apparent to those skilled in the art from this disclosure that the rear derailleur 12 could be a top-normal type if needed and/or desired.

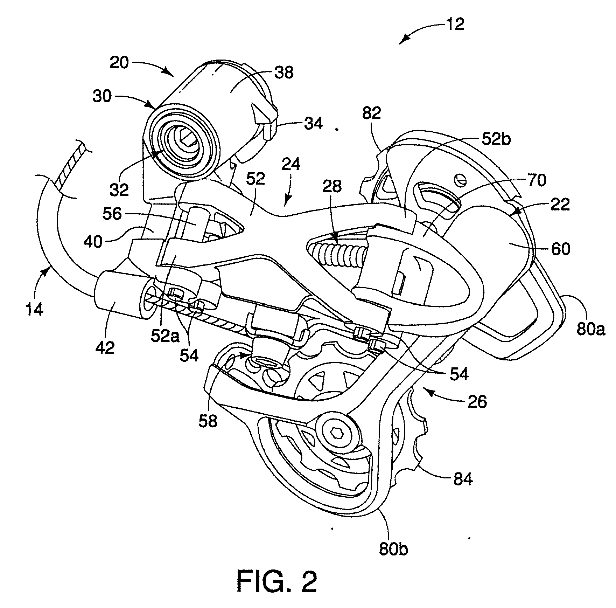

Referring to Figures 1 and 2, the rear derailleur 12 basically includes a base member 20, a movable member 22, a linkage assembly 24, a chain guide 26 and a main biasing member 28. Basically, the base member 20 is fixedly coupled to the frame 10 for limited pivotal movement, while the movable member 22 is coupled to the base member 20 via the linkage assembly 24. The chain guide 26 is coupled to the movable member 22 for limited pivotal movement. In the illustrated embodiment, the biasing member 28 is coupled between the base member 20 and the movable member 22 of the rear derailleur 12 such that the chain guide 26 is normally biased laterally inwardly toward the largest rear sprocket RS, as mentioned above.

The basic operation of the rear derailleur 12 is well known in the prior art. Thus, the rear derailleur 12 will not be discussed or illustrated in detail herein, except as need to make and use the present invention. In other words, this disclosure will focus on the structures contributing to the improved frictional performance of the rear derailleur 12 of the present invention. While a mechanical (i.e. cable actuated) derailleur 12 is illustrated, it will be apparent to those skilled in the art from this disclosure that the present invention can be employed in other types of derailleurs such as pneumatic derailleurs, motorized/electrical derailleurs or electromechanical derailleurs.

In this embodiment, the base member 20 is illustrated as being coupled directly to the frame 10. However, it will be apparent to those skilled in the art from this disclosure that a removable derailleur hanger or hanging plate (not shown) may be utilized to connect the base member 20 of the rear derailleur 12 to the frame 10. These types of derailleur hangers (not shown) are well known in the art, and thus, will not be discussed or illustrated herein.

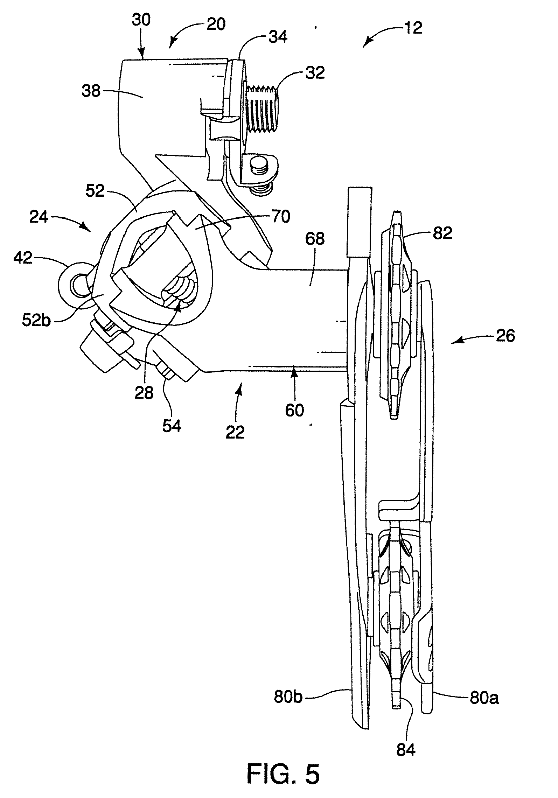

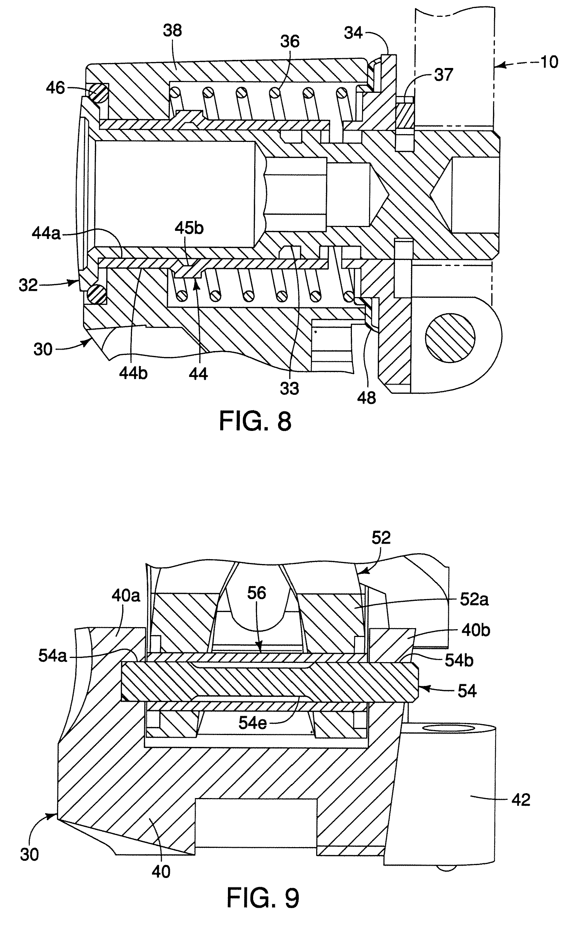

Referring now to Figures 1-8, the base member 20 basically includes a first housing 30, a first horizontal shaft or axle 32, a fixed element (stopper plate) 34 and a first biasing member 36. The housing 30 is pivotally supported on the first axle 32. The fixed element (stopper plate) 34 is secured to the first axle 32 and to the bicycle frame 10 to control the amount of pivotal movement of the housing 30 relative to the bicycle frame 10. The first biasing member 36 is preferably a coil spring that is coaxially mounted about the first axle 32. The first spring 36 has a one end coupled to the housing 30 and the opposite end coupled to the stopper plate 34 to apply a rotational biasing force to the housing 30 in a conventional manner. A U-shaped retainer clip 37 is mounted adjacent a threaded end of the first axle 32 to retain the structure together prior to mounting to the bicycle frame 10. The threaded end of the first axle 32 is threadedly attached to the bicycle frame 10 as seen in Figure 8.

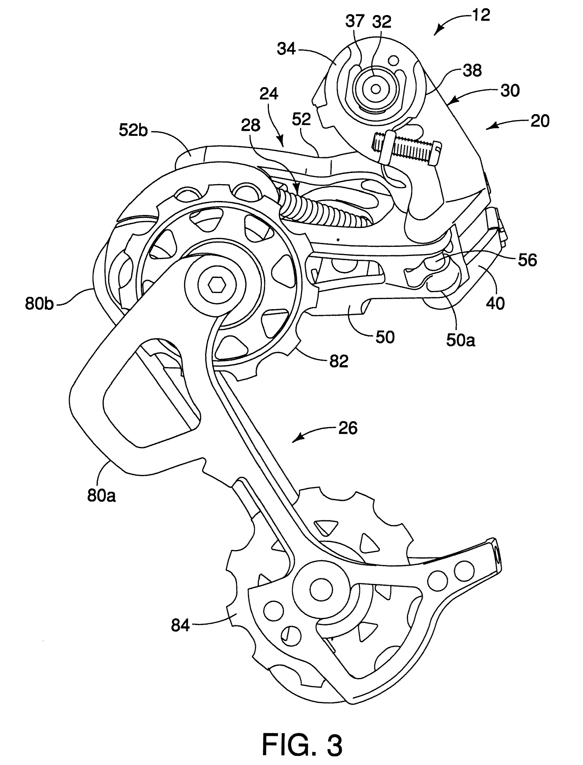

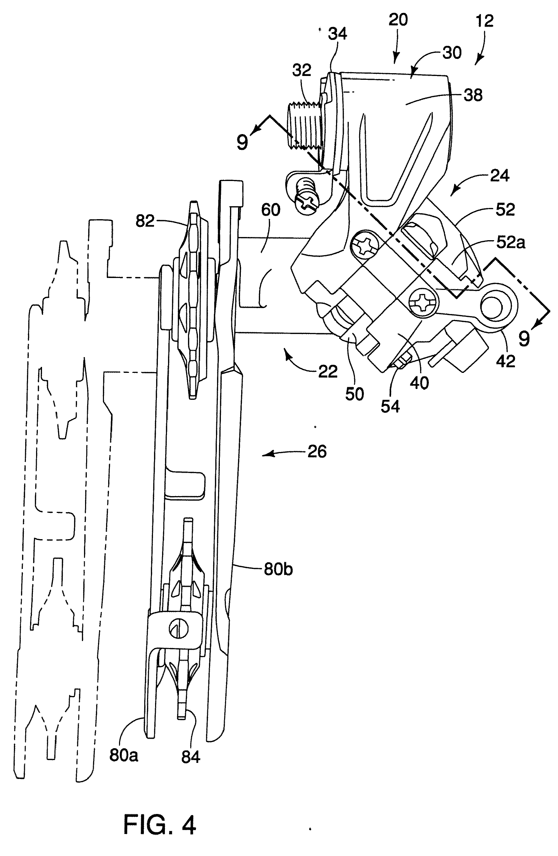

As seen in Figures 3 and 4, the housing 30 basically includes a main mounting portion 38, a first support portion 40 and a cable guide element 42. Preferably, the main mounting portion 38, the first support portion 40 and the cable guide element 42 are integrally formed together as a one-piece, unitary member from a lightweight, rigid material such as a metallic material or any other material that is well known in the bicycle art. The main mounting portion 38 is pivotally supported on the first axle 32 for limited pivotal movement. Specifically, as seen in Figure 8, the main mounting portion 38 has a stepped bore with the first axle 32 received therein. The first support portion 40 is configured and arranged to have the linkage assembly 24 pivotally coupled thereto in accordance with the present invention. The cable guide element 42 includes a stepped bore configured to receive the outer casing of the rear derailleur cable 14 partially therein and the inner wire of the rear derailleur cable 14 therethrough in a conventional manner.

As best seen in Figure 8, the first axle 32 is a bolt that is threadedly coupled to the bicycle frame 10 such that the first axle 32 forms a fixed pivot axle. The first axle 32 includes a (first) tubular sleeve member 44 pivotally mounted thereon in accordance with the present invention. The sleeve member 44 is arranged between the first axle 32 and the main mounting portion 38 to pivotally support the housing 30 on the first axle 32 in a smooth manner. An O-ring 46 that is constructed of a low-friction, slightly resilient material is arranged between the free end of the first axle 32 and the housing 30. Similarly, a seal ring 48 that is constructed of a low-friction, slightly resilient material is arranged at the opposite end of the first axle between the stopper plate 34 and the housing 30. The rings 46 and 48 are configured and arranged to seal opposite ends of the stepped bore of the main mounting portion 38.

Still referring now to Figure 8, the pivotal connection between the first axle 32 and the sleeve member 44 in accordance with the present invention will now be explained in more detail. The sleeve member 44 normally moves with the housing 30 relative to the first axle 32. However, the tubular sleeve member 44 is preferably constructed as a separate member from the first support portion 40 (i.e., as a separate member from the housing 30). The first axle 32 and the sleeve member 44 are configured and arranged to reduce friction therebetween both initially and over an extended period of time (i.e., even after extended use of the rear derailleur 12). In particular, the first axle 32 and the sleeve member 44 are configured and arranged to be provided with a relatively large amount of grease during initial assembly and to retain the grease during use. The tubular sleeve member 44 extends longitudinally along a majority of the longitudinal length of the first axle 32.

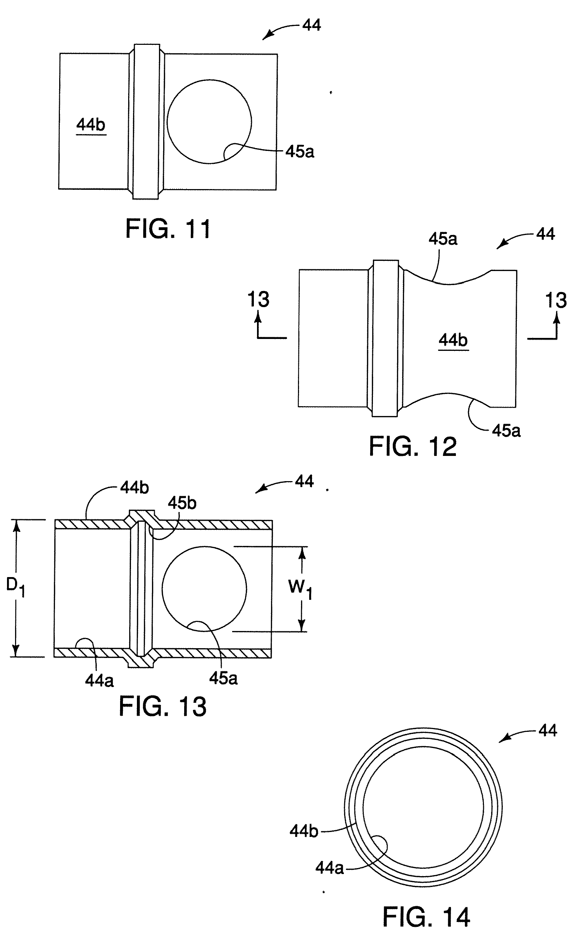

Specifically, as seen in Figures 11-14, the sleeve member 44 includes a pair of opposed holes or grease openings 45a and an annular grease retaining groove 45b. The grease openings 45a extend between an interior surface 44a and an exterior surface 44b. The pair of opposed grease openings 45a are aligned with each other as viewed along an axis (i.e., a center axis of the grease openings 45a) transverse to a longitudinal center axis of the tubular sleeve member 44. In the illustrated embodiment, each of the grease openings 45a preferably has a circular shape with a maximum width W₁. The maximum width W₁ is preferably larger than one half of a minimum internal diameter D₁ of the sleeve member 44 as best seen in Figure 13. In other words, the grease openings 45a are relatively large. The grease openings 45a can be packed with a significant amount of grease during initial assembly of the rear derailleur 12. This grease can migrate into appropriate areas between the first axle 32 and the sleeve member 44 during use as needed, over time. The grease openings 45a also reduce weight of the sleeve member 44. Finally, the grease openings 45a reduce the surface area of the sleeve member 44 that moves on the first axle 32, and thus, reduces friction.

The grease retaining groove 45b has an annular shape and is longitudinally spaced from the grease openings 45a. The grease retaining groove 45b has a uniform shape around the periphery of the sleeve member 44. The grease retaining groove 45b preferably has a depth of at least about 0.5 millimeter and a width of at least about 0.5 millimeter. In the illustrated embodiment, the grease retaining groove 45b has a substantially trapezoid shape as viewed in cross-section (e.g., Figure 13) with a varying width that varies between a minimum of at least about 0.5 millimeter to a maximum of at least three times (triple) the minimum width. The grease retaining groove 45b, like the grease openings 45a, can be packed with a significant amount of grease during initial assembly of the rear derailleur 12. This grease can migrate into appropriate areas between the first axle 32 and the sleeve member 44 during use as needed, over time. Like the grease openings 45a, the grease retaining groove 45b reduces the surface area of the sleeve member 44 that moves on the first axle 32, and thus, reduces friction.

The first axle 32 preferably includes an annular groove 33 formed therein that is in fluid communication with the grease openings 45a of the tubular sleeve member 44. The annular groove 33, like the grease openings 45a, can be packed with a significant amount of grease during initial assembly of the rear derailleur 12. This grease can migrate into appropriate areas between the first axle 32 and the sleeve member 44 during use as needed, over time. Like the grease openings 45a, the annular groove 33 reduces the surface area of the sleeve member 44 that moves on the first axle 32, and thus, reduces friction. The annular groove 33, the grease openings 45a and the grease retaining groove 45b all preferably cooperate to reduce friction between the sleeve member 44 and the first axle 32 after initial assembly of the rear derailleur 12 and after extended use of the rear derailleur 12.

Referring now to Figures 1-7 and 9, the linkage assembly 24 and the pivotal connections between the linkage assembly 24 and the base member 20 and the movable member 22 will now be explained in more detail. The linkage assembly 24 basically includes inner and outer links 50 and 52. The inner and outer links 50 and 52 are pivotally coupled to the housing 30 of the base member 20 and pivotally coupled to the movable member 22. Specifically, four pivot pins 54 and four pivot sleeves 56 are used to pivotally couple the ends of the inner and outer links 50 and 52 to the base member 20 and the movable member 22 in accordance with the present invention.

Specifically, the inner link 50 includes a first inner link end 50a and a second inner link end 50b, while the outer link 52 includes a first outer link end 52a and second outer link end 52b. The first inner and outer link ends 50a and 52a are pivotally coupled to the first support portion 40 of the base member 20 using two of the pivot pins 54 and two of the pivot sleeves 56. while the second inner and outer link ends 50b and 52b are pivotally coupled to the movable member 22 using two of the pivot pins 54 and two of the pivot sleeves 56. The inner link 50 is provided with a cable-fixing structure 58 for attaching the inner wire of the shift cable 14 thereto in a conventional manner.

The pivotal connections between the inner and outer links 50 and 52, the base member 20 and the movable member 22 are substantially identical. Accordingly, only one of these pivotal connections will be discussed and illustrated in detail herein for the sake of brevity. However, it will be apparent to those skilled in the art from this disclosure that descriptions and illustrations of this single pivotal connection also apply to the other pivotal connections between the inner and outer links 50 and 52, the base member 20 and the movable member 22, except as explained and illustrated herein.

As seen in Figures 3, 6, 7 and 9, the first outer link end 52a is pivotally coupled between a pair of flanges 40a and 40b of the first support portion 40 using one of the pivot pins 54 and one of the pivot sleeves 56. Specifically, the outer link 52 has the pivot sleeve 56 non-movably mounted thereto, while the pivot pin 54 is non-movably mounted to the first support portion 40. The pivot sleeve 56 is pivotally mounted on the pivot pin 54 such that the outer link 52 is pivotally coupled to the base member.

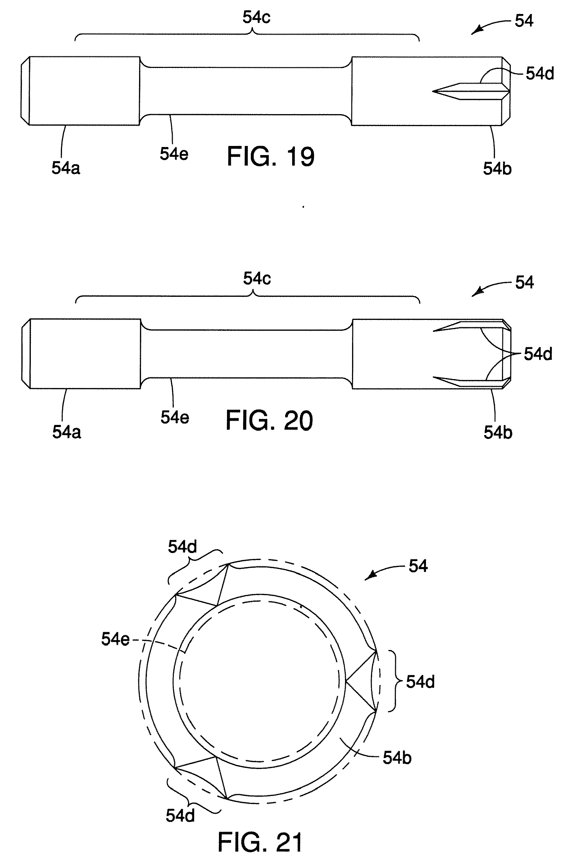

More specifically, the flange 40a of the first support portion 40 is an inner/upper flange, while the flange 40b of the first support portion 40 is an outer/lower flange spaced from the flange 40a. A linkage receiving area is formed between the flanges 40a and 40b. Each pivot pin 54 includes a first attachment end 54a, a second attachment end 54b and a pivot section 54c extending between the first and second attachment ends 54a and 54b, as best seen in Figures 19-21. The first attachment end 54a is received in a blind bore of the inner/upper flange 40a, while the second attachment end 54b is received in a through bore of the outer/lower flange 40b. The pivot section 54c is pivotally received within the pivot sleeve 56.

The second attachment section 54b is non-movably fixed within the through hole of the flange 40b during assembly. Preferably, the second attachment section 54b has an attachment structure 54d that extends outwardly from the normal outer diameter (i.e., the diameter of the pivot pin 54 along its majority) to facilitate this arrangement. The first attachment end 54a can be press-fitted into the blind bore of the flange 40a, or can be movably received within the blind bore as needed and/or desired. In other words, in the illustrated embodiment, the second attachment end 54b is preferably primarily utilized in order to fix the pivot pin 54 to the base member 20.

The pivot section 54c of the pivot pin 54 includes a grease fillable recess 54e extending in a circumferential direction about the entire periphery of the pivot pin 54. The grease fillable recess 54e preferably has a depth of about 0.5 millimeter, and a length L that is longer than one-half of the length of the pivot sleeve 56. In any case, the length L is preferably at least one-third of the length of the pivot sleeve 56. In other words, a majority of the pivot section 54c that is received in the pivot sleeve 56 preferably has the grease fillable recess 54e extending therealong. The grease fillable recess 54e is preferably packed with lubricant (e.g. grease) prior to mounting the pivot pin in the holes of the flanges 40a and 40b.

The pivot sleeve 56 is a tubular member with a circular cross-sectional shape. The pivot sleeve 56 is preferably a separate member from the base member 20 and the outer link 52. The pivot sleeve 56 is fixed to the outer link 52 via a press fit or the like. Specifically, the pivot sleeve 56 is preferably frictionally fixed within a pair of through holes formed in free ends of the X-shaped outer link 52, as best seen in Figure 9. The pivot sleeve 56 is configured and arranged to extend between the flanges 40a and 40b to pivotally support the pivot pin 54 therein along the entire pivot section 54c.

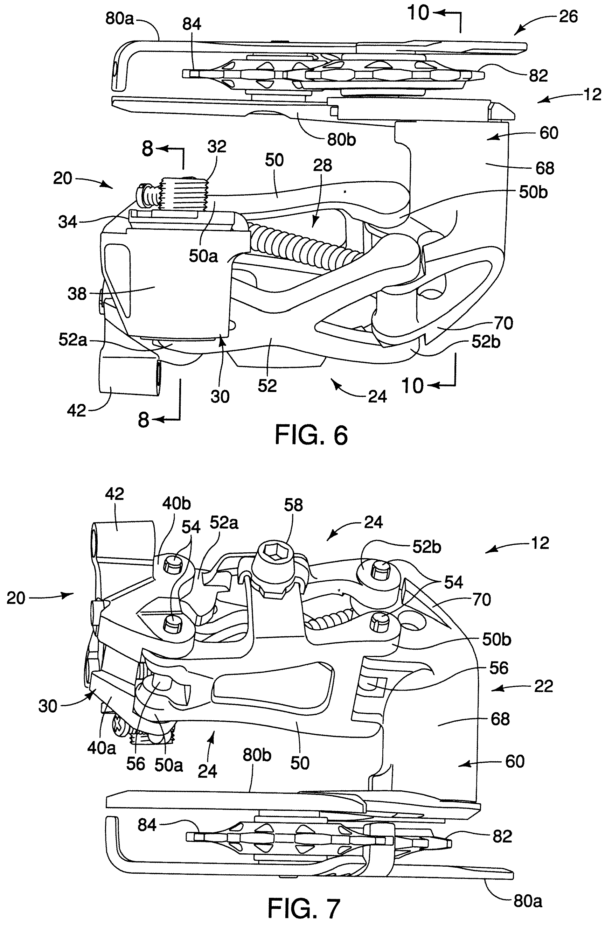

The first inner link end 50a is pivotally coupled between the flanges 40a and 40b using one of the pivot pins 54 and one of the pivot sleeves 56 in a manner identical to the outer link 52, as best understood from Figures 3 and 7. The only difference is the shape of the inner link 50 as compared to the outer link 52. Accordingly, the pivotal connection between the first inner link end 50a and the first support portion 40 will not be discussed and/or illustrated in further detail herein. Rather, it will be apparent to those skilled in the art from this disclosure that the descriptions and illustrations of the pivotal connection between the first outer link end 52a and the first support portion 40 also apply to the pivotal connection between the first inner link end 50a and the first support portion 40, except as explained and illustrated herein.

The second inner and outer link ends 50b and 52b are pivotally coupled to the movable member 22 in a manner identical to the first inner and outer link ends 50a and 50b, except that the arrangement between the movable member 22 relative to the inner and outer links 50 and 52 is reversed as compared to the arrangement between the base member 20 and the inner and outer links 50 and 52, as seen in Figures 2 and 7. In other words, second inner and outer link ends 50b and 52b have the pivot pins 54 fixed thereto, while the movable member 22 has the pivot sleeves 56 fixed thereto. This arrangement will be discussed in more detail below.

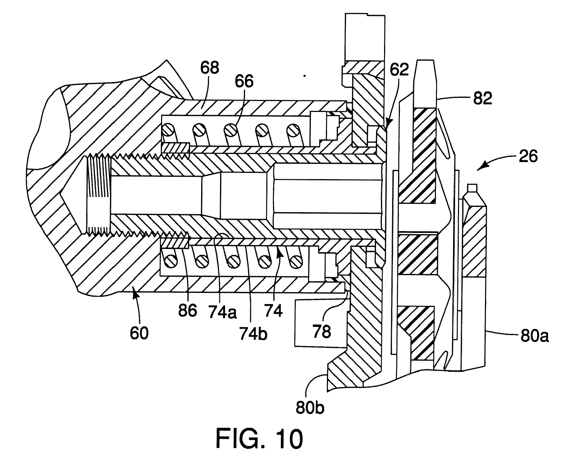

Referring to Figures 1-7, 10 and 15-18, the movable member 22 and the connections of the linkage assembly 24 and the chain guide 26 to the movable member 22 will now be explained in more detail. The movable member 22 basically includes basically includes a second housing 60, a second horizontal shaft or axle 62, and a second biasing member 66. The housing 60 is fixedly attached to the second axle 62 in order to pivotally support the chain guide 26 on the second axle 62. The second biasing member 66 is preferably a coil spring that is coaxially mounted about the second axle 62. The second spring 66 has one end coupled to the housing 60 and the opposite end coupled to the chain guide 26 to apply a rotational biasing force to the housing 60 in a conventional manner. The threaded end of the second axle 62 is threadedly attached to the second housing 60 as seen in Figure 10.

The housing 60 basically includes a secondary mounting portion 68 and a second support portion 70. Preferably, the secondary mounting portion 68 and the second support portion 70 are integrally formed together as a one-piece, unitary member from a lightweight, rigid material such as a metallic material or any other material that is well known in the bicycle art. The secondary mounting portion 68 has the second axle 62 attached thereto in order to pivotally support the chain guide 26 for limited pivotal movement. Specifically, the secondary mounting portion 68 has a stepped bore with a threaded section having the second axle 62 received therein. The second support portion 70 is configured and arranged to have the linkage assembly 24 pivotally coupled thereto using two of the pivot pins 54 and two of the pivot sleeves 56 in accordance with the present invention.

Specifically, the second support portion 70 is provided with inner and outer through holes with two of the pivot sleeves 56 fixedly mounted therein in a manner substantially identical to the way the two pivot sleeves 56 are mounted to the first inner and outer link ends 50a and 52a. Likewise, two of the pivot pins 54 are mounted to the second inner and outer link ends 50b and 52b in a manner substantially identical to the manner in which the two pivot pins 54 are mounted to the flanges 40a and 40b of first support portion 40.

The second axle 62 is a bolt that is threadedly coupled to the secondary mounting portion such that the second axle 62 forms a movable pivot axle. The second axle 62 includes a (second) tubular sleeve member 74 pivotally mounted thereon in accordance with the present invention. The sleeve member 74 is arranged between the second axle 62 and the chain guide to pivotally support the chain guide 26 on the second axle 62 in a smooth manner. Optionally, an O-ring (e.g. similar to the O-ring 46) can be arranged between the free end of the second axle 62 and the chain guide 26. Similarly, a seal ring 78 that is constructed of a low-friction, slightly resilient material is arranged between the chain guide 26 and an outer tubular portion of secondary mounting portion 68.

Referring now to Figures 10 and 15-18, the pivotal connection between the second axle 62 and the sleeve member 74 in accordance with the present invention will now be explained in more detail. The sleeve member 74 normally moves with the chain guide 26 relative to the second axle 62. However, the tubular sleeve member 74 is preferably constructed as a separate member from the chain guide 26. The second axle 62 and the sleeve member 74 are configured and arranged to reduce friction therebetween both initially and over an extended period of time (i.e., even after extended use of the rear derailleur 12). In particular, the second axle 62 and the sleeve member 74 are configured and arranged to be provided with a relatively large amount of grease during initial assembly and to retain the grease during use. The tubular sleeve member 74 extends longitudinally along a majority of the longitudinal length of the second axle 62.

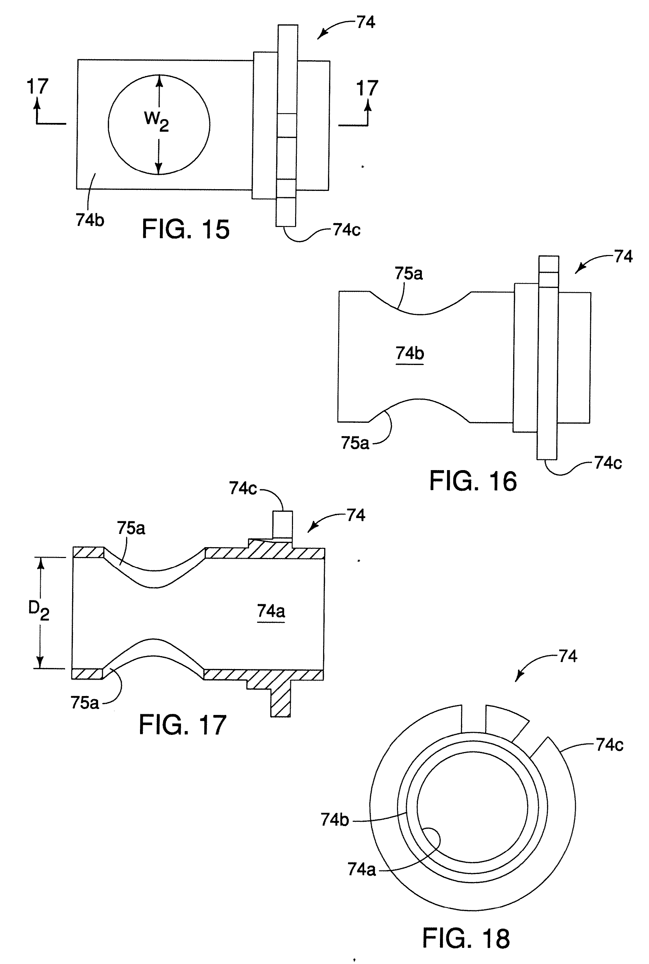

Specifically, the sleeve member 74 includes a pair of opposed holes or grease openings 75a. The grease openings 75a extend between an interior surface 74a and an exterior surface 74b. The sleeve member 74 further includes an annular flange 74c extending outwardly from the exterior surface 74b. The annular flange 74c has notches formed therein for receiving an end of the spring 66 therethrough into ingagement with the chain guide 26. The opposed grease openings 75a are aligned with each other as viewed along an axis (i.e., a center axis of the grease openings 75a) transverse to a longitudinal center axis of the tubular sleeve member 74. In the illustrated embodiment, each of the grease openings 75a preferably has a circular shape with a maximum width W₂. The maximum width W₂ is preferably larger than one half of a minimum internal diameter D₂ of the sleeve member 74 as best seen in Figures 15 and 17. In other words, the grease openings 75a are relatively large. The grease openings 75a can be packed with a significant amount of grease during initial assembly of the rear derailleur 12. This grease can migrate into appropriate areas between the second axle 62 and the sleeve member 74 during use as needed, over time. The grease openings 75a also reduce weight of the sleeve member 74. Finally, the grease openings 75a reduce the surface area of the sleeve member 74 that moves on the second axle 62, and thus, reduces friction.

Referring to Figures 1-7 and 10, the chain guide 26 basically has a pair of guide plates 80a and 80b with a guide sprocket or pulley 82 rotatably coupled between the guide plates 80a and 80b and a tension sprocket or pulley 84 rotatably coupled between the guide plates 80a and 80b. The guide sprocket 82 and the tension sprocket 84 engage the chain C in a conventional manner. Accordingly, the additional parts of the chain guide 26 will not be discussed or illustrated in detail herein. The pulleys 82 and 84 engage with the driving chain C in an inverse-S-like manner, thereby guiding the chain C to a desired sprocket RS of the multistage sprocket assembly.

The chain guide 26 is movably supported on the movable member 22 by the second axle 62. Specifically, the second shaft 62 extends through a hole in the guide plate 80b and is then threadedly attached to the movable member 22. Specifically, after the second axle 62 is inserted through the hole in the guide plate 80b, the second sleeve 74 is mounted on the second axle 62. A tubular spacer 86 is mounted axially between the sleeve 74 and the secondary mounting portion 68. The seal ring 78 is mounted between the radially outer edge of the sleeve member 74 and an outer tubular portion of the secondary mounting portion 68.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle rear derailleur (12) comprising:
a base member (20) including a first axle (32) configured to be attached to a bicycle frame (10) and a first support portion (40) pivotally mounted relative to the first axle (32);
a movable member (22) including a second axle (62), a second support portion (70) pivotally mounted relative to the second axle and a chain guide (26) coupled to the second axle; and
a linkage assembly (24) coupled between the first and second support portions (40,70) to move the chain guide portion (26) between a retracted position and an extended position,
at least one tubular sleeve member (44, 74) pivotally mounted onto one of the first and second axles (32,62) and extending longitudinally along a majority of the respective axle (32, 62); and
**characterized in that** said tubular sleeve member (44,74) has a grease receiving opening (45a, 75a) that extends between a cylindrical radially exterior surface (44b, 74b) of the tubular sleeve member (44,74) and a cylindrical radially interior surface (44a, 74a) of the tubular sleeve member (44, 74).

2. The bicycle rear derailleur (12) according to claim 1, **characterized in that**
the tubular sleeve member (44, 74) includes a pair of opposed grease openings (45a, 75a).

3. The bicycle rear derailleur (12) according to claim 2, **characterized in that**
the pair of opposed grease openings (45a, 75a) are aligned with each other as viewed along said axis transverse to a longitudinal axis of the tubular sleeve member (44, 74).

4. The bicycle rear derailleur (12) according to any one of claims 1 to 3, **characterized in that**
the grease opening (45a, 75a) has a maximum width (W1, W2) that is larger than one half of a minimum internal diameter (D1, D2) of the sleeve member (44, 74).

5. The bicycle rear derailleur (12) according to any one of claims 1 to 4, **characterized in that**
the tubular sleeve member (44, 74) includes an annular grease retaining groove (45b) that is longitudinally spaced from the grease opening (45a, 75a).

6. The bicycle rear derailleur (12) according to any one of claims 1 to 5, **characterized in that**
the axle (32, 62) having the tubular sleeve member (44, 74) further includes an annular groove (33) formed therein that is in fluid communication with the grease opening (45a, 75a) of the tubular sleeve member (44, 74).

7. The bicycle rear derailleur (12) according to any one of claims 1 to 6, **characterized in that**
the tubular sleeve member (44, 74) is constructed as a separate member from the respective support portion (40, 70).

8. The bicycle rear derailleur (12) according to any one of claims 1 to 7, **characterized in that**
the tubular sleeve member (44) is mounted on the first axle (32).

9. The bicycle rear derailleur (12) according to any one of claims 1 to 7, **characterized in that**
the tubular sleeve member (74) is mounted on the second axle (62).

10. The bicycle rear derailleur (12) according to any one of claims 1 to 7, **characterized in that**
a tubular sleeve member (44, 74) having a grease opening (45a, 75a) extending between a cylindrical radially exterior surface (44b, 74b) of the tubular sleeve member (44,74) and a cylindrical radially interior surface (44a, 74a) of the tubular sleeve member (44, 74) is mounted on each of the first (32) and second (62) axles.

11. The bicycle rear derailleur (12) according to any one of claims 1 to 10, **characterized in that**
the linkage assembly (24) includes an inner link (50) and an outer link (52), the inner link having a first inner link end (50a) pivotally coupled to the first support portion (40) and a second inner link end (50b) pivotally coupled to the second support portion (70), and the outer link having a first outer link end (52a) pivotally coupled to the first support portion (40) and a second outer link end (52b) pivotally coupled to the second support portion (70).

12. The bicycle rear derailleur (12) according to claim 11, **characterized in that**
the linkage assembly (24) includes at least one pivot pin (54) interconnecting at least one of the first and second inner (50a, 50b) and outer (52a, 52b) link ends to at least one of the first (40) and second (70) support portions with the pivot pin (54) having a grease fillable recess (54e) formed therein that extends in a circumferential direction and is located between an interface of the pivot pin (54) and the link.

## Patentansprüche

1. Hinterradkettenschaltung (12) für ein Fahrrad, umfassend:
ein Basiselement (20) mit einer ersten Achse (32), die dazu ausgelegt ist, an einem Fahrradrahmen (10) befestigt zu sein, und einen ersten Stützabschnitt (40), der drehbar relativ zu der ersten Achse (32) angebracht ist,
ein bewegliches Element (22) mit einer zweiten Achse (62), einem zweiten Stützabschnitt (70), der drehbar relativ zu der zweiten Achse angebracht ist, und einer Kettenführung (26), die mit der zweiten Achse verbunden ist, und
eine Verbindungsanordnung (24), die zwischen den ersten und zweiten Stützabschnitt (40, 70) gekoppelt ist, um den Kettenführungsabschnitt (26) zwischen einer eingefahrenen Position und einer ausgefahrenen Position zu bewegen,
wenigstens ein röhrenförmiges Hülsenelement (44, 74), das drehbar auf einer der ersten und zweiten Achsen (32, 62) angebracht ist und sich entlang eines Großteils der jeweiligen Achse (32, 62) längs erstreckt, und
**dadurch gekennzeichnet, dass** das röhrenförmige Hülsenelement (44, 74) eine schmiermittelempfangende Öffnung (45a, 75a) aufweist, die sich zwischen einer zylindrischen, radial äußeren Oberfläche (44b, 74b) des röhrenförmigen Hülsenelements (44, 74) und einer zylindrischen, radial inneren Oberfläche (44a, 74a) des röhrenförmigen Hülsenelements (44, 74) erstreckt.

2. Hinterradkettenschaltung (12) nach Anspruch 1, **dadurch gekennzeichnet, dass**
das röhrenförmige Hülsenelement (44, 74) ein Paar sich gegenüberliegender Schmiermittelöffnungen (45a, 75a) aufweist.

3. Hinterradkettenschaltung (12) nach Anspruch 2, **dadurch gekennzeichnet, dass**
das Paar sich gegenüberliegender Schmiermittelöffnungen (45a, 75a) entlang der Achse gesehen, die quer zu einer Längsachse des röhrenförmigen Hülsenelements (44, 74) angeordnet ist, zueinander ausgerichtet sind.

4. Hinterradkettenschaltung (12) nach einem der Ansprüche 1 bis 3, **dadurch gekennzeichnet, dass**
die Schmiermittelöffnung (45a, 75a) einen maximale Weite (W1, W2) aufweist, die größer ist als die Hälfte eines minimalen Innendurchmessers (D1, D2) des Hülsenelements (44, 74).

5. Hinterradkettenschaltung (12) nach einem der Ansprüche 1 bis 4, **dadurch gekennzeichnet, dass**
das röhrenförmige Hülsenelement (44, 74) eine ringförmige schmiermittelzurückhaltende Nut (45b) aufweist, die in der Längsrichtung von der Schmiermittelöffnung (45a, 75a) beabstandet ist.

6. Hinterradkettenschaltung (12) nach einem der Ansprüche 1 bis 5, **dadurch gekennzeichnet, dass**
die Achse (32, 62) mit dem röhrenförmigen Hülsenelement (44, 74) ferner eine in ihrem Inneren ausgebildete ringförmige Nut (33) aufweist, die in Fluidverbindung mit der Schmiermittelöffnung (45a, 75a) des röhrenförmigen Hülsenelements (44, 74) steht.

7. Hinterradkettenschaltung (12) nach einem der Ansprüche 1 bis 6, **dadurch gekennzeichnet, dass**
das röhrenförmige Hülsenelement (44, 74) als von dem jeweiligen Stützabschnitt (40, 70) separates Element konstruiert ist.

8. Hinterradkettenschaltung (12) nach einem der Ansprüche 1 bis 7, **dadurch gekennzeichnet, dass**
das röhrenförmige Hülsenelement (44) an der ersten Achse (32) befestigt ist.

9. Hinterradkettenschaltung (12) nach einem der Ansprüche 1 bis 7, **dadurch gekennzeichnet, dass**
das röhrenförmige Hülsenelement (74) an der zweiten Achse (62) befestigt ist.

10. Hinterradkettenschaltung (12) nach einem der Ansprüche 1 bis 7, **dadurch gekennzeichnet, dass**
ein röhrenförmiges Hülsenelement (44, 74) mit einer Schmiermittelöffnung (45a, 75a), die sich zwischen einer zylindrischen, radial äußeren Oberfläche (44b, 74b) des röhrenförmigen Hülsenelements (44, 74) und einer zylindrischen, radial inneren Oberfläche (44a, 74a) des röhrenförmigen Hülsenelements (44, 74) erstreckt, jeweils an der ersten (32) und zweiten (62) Achse befestigt ist.

11. Hinterradkettenschaltung (12) nach einem der Ansprüche 1 bis 10, **dadurch gekennzeichnet, dass**
die Verbindungsanordnung (24) eine innere Verbindung (50) und eine äußere Verbindung (52) umfasst, wobei die innere Verbindung ein erstes inneres Verbindungsende (50a), das drehbar an den ersten Stützabschnitt (40) gekoppelt ist, und ein zweites inneres Verbindungsende (50b), das drehbar an den zweiten Stützabschnitt (70) gekoppelt ist, aufweist, und die äußere Verbindung ein erstes äußeres Verbindungsende (52a), das drehbar an den ersten Stützabschnitt (40) gekoppelt ist, und ein zweites äußeres Verbindungsende (52b), das drehbar an den zweiten Stützabschnitt (70) gekoppelt ist, aufweist.

12. Hinterradkettenschaltung (12) nach Anspruch 11, **dadurch gekennzeichnet, dass**
die Verbindungsanordnung (24) wenigstens einen Drehzapfen (54) umfasst, der wenigstens eines der ersten und zweiten inneren (50a, 50b) und äußeren (52a, 52b) Verbindungsenden mit wenigsten einem der ersten (40) und zweiten (70) Stützabschnitte verbindet, wobei der Drehzapfen (54) eine in seinem Inneren ausgebildete, mit Schmiermittel befüllbare Ausnehmung (54e) aufweist, die sich in eine Umfangsrichtung erstreckt und sich zwischen einer Schnittstelle zwischen dem Drehzapfen (54) und der Verbindung befindet.

## Revendications

1. Dérailleur arrière de bicyclette (12) comprenant :
un élément de base (20) comprenant un premier essieu (32) configuré pour être fixé sur un cadre de bicyclette (10) et une première partie de support (40) montée de manière pivotante par rapport au premier essieu (32) ;
un élément mobile (22) comprenant un second essieu (62), une seconde partie de support (70) montée de manière pivotante par rapport au second essieu et un guide de chaîne (26) couplé au second essieu ; et
un ensemble de tringlerie (24) couplé entre les première et seconde parties de support (40, 70) pour déplacer la partie de guide de chaîne (26) entre une position rétractée et une position déployée,
au moins un élément de manchon tubulaire (44, 74) monté de manière pivotante sur l'un des premier et second essieux (32, 62) et s'étendant longitudinalement le long d'une majeure partie de l'essieu (32, 62) respectif ; et
**caractérisé en ce que** ledit élément de manchon tubulaire (44, 74) a une ouverture de réception de lubrifiant (45a, 75a) qui s'étend entre une surface cylindrique radialement extérieure (44b, 74b) de l'élément de manchon tubulaire (44, 74) et une surface cylindrique radialement intérieure (44a, 74a) de l'élément de manchon tubulaire (44, 74).

2. Dérailleur arrière de bicyclette (12) selon la revendication 1, **caractérisé en ce que** :
l'élément de manchon tubulaire (44, 74) comprend une paire d'ouvertures de lubrifiant (45a, 75a) opposées.

3. Dérailleur arrière de bicyclette (12) selon la revendication 2, **caractérisé en ce que** :
la paire d'ouvertures de lubrifiant opposées (45a, 75a) sont alignées entre elles, comme observé le long dudit axe transversal à l'axe longitudinal de l'élément de manchon tubulaire (44, 74).

4. Dérailleur arrière de bicyclette (12) selon l'une quelconque des revendications 1 à 3, **caractérisé en ce que** :
l'ouverture de lubrifiant (45a, 75a) a une largeur maximum (W1, W2) qui est supérieure à la moitié d'un diamètre interne minimum (D1, D2) de l'élément de manchon (44, 74).

5. Dérailleur arrière de bicyclette (12) selon l'une quelconque des revendications 1 à 4, **caractérisé en ce que** :
l'élément de manchon tubulaire (44, 74) comprend une rainure de retenue de lubrifiant annulaire (45b) qui est longitudinalement espacée de l'ouverture de lubrifiant (45a, 75a).

6. Dérailleur arrière de bicyclette (12) selon l'une quelconque des revendications 1 à 5, **caractérisé en ce que** :
l'essieu (32, 62) ayant l'élément de manchon tubulaire (44, 74) comprend en outre une rainure annulaire (33) formée à l'intérieur de ce dernier qui est en communication de fluide avec l'ouverture de lubrifiant (45a, 75a) de l'élément de manchon tubulaire (44, 74).

7. Dérailleur arrière de bicyclette (12) selon l'une quelconque des revendications 1 à 6, **caractérisé en ce que** :
l'élément de manchon tubulaire (44, 74) est construit comme un élément séparé de la partie de support (40, 70) respective.

8. Dérailleur arrière de bicyclette (12) selon l'une quelconque des revendications 1 à 7, **caractérisé en ce que** :
l'élément de manchon tubulaire (44) est monté sur le premier essieu (32).

9. Dérailleur arrière de bicyclette (12) selon l'une quelconque des revendications 1 à 7, **caractérisé en ce que** :
l'élément de manchon tubulaire (74) est monté sur le second essieu (62).

10. Dérailleur arrière de bicyclette (12) selon l'une quelconque des revendications 1 à 7, **caractérisé en ce que** :
un élément de manchon tubulaire (44, 74) ayant une ouverture de lubrifiant (45a, 75a) s'étendant entre la surface cylindrique radialement extérieure (44b, 74b) de l'élément de manchon tubulaire (44, 74) et une surface cylindrique radialement intérieure (44a, 74a) de l'élément de manchon tubulaire (44, 74) est monté sur chacun parmi les premier (32) et second (62) essieux.

11. Dérailleur arrière de bicyclette (12) selon l'une quelconque des revendications 1 à 10, **caractérisé en ce que** :
l'ensemble de tringlerie (24) comprend une liaison interne (50) et une liaison externe (52), la liaison interne ayant une première extrémité de liaison interne (50a) couplée de manière pivotante à la première partie de support (40) et une seconde extrémité de liaison interne (50b) couplée de manière pivotante à la seconde partie de support (70), et la liaison externe ayant une première extrémité de liaison externe (52a) couplée de manière pivotante à la première partie de support (40) et une seconde extrémité de liaison externe (52b) couplée de manière pivotante à la seconde partie de support (70).

12. Dérailleur arrière de bicyclette (12) selon la revendication 11, **caractérisé en ce que** :
l'ensemble de tringlerie (24) comprend au moins un axe de pivot (54) interconnectant au moins l'une des première et seconde extrémités de liaison interne (50a, 50b) et externe (52a, 52b) à au moins l'une des première (40) et seconde (70) parties de support avec l'axe de pivot (54) ayant un évidement (54e) pouvant être rempli de lubrifiant, formé à 11antérieur de cette dernière, qui s'étend dans une direction circonférentielle et est positionné entre une interface de l'axe de pivot (54) et la liaison.
